(19) **Europäisches Patentamt**

**European Patent Office**

**Office européen des brevets**

(11) **EP 1 261 147 A1**

(12) **EUROPEAN PATENT APPLICATION**

(43) Date of publication:
**27.11.2002 Bulletin 2002/48**

(51) Int Cl.⁷: **H04B 7/005**

(21) Application number: **01401332.0**

(22) Date of filing: **21.05.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **MOTOROLA, INC.**
**Schaumburg, IL 60196 (US)**

(72) Inventors:
• **Elicegui, Lucas**
**92410 Clamart (FR)**
• **Blaise, Freddy**
**75015 Paris (FR)**
• **Goeusse, Francois Roger David**
**La capelle les Boulonge, 62360 (FR)**

• **Calin, Doru**
**78990 Elancourt (FR)**
• **Taffin, Arnauld**
**75014 Paris (FR)**

(74) Representative: **Wharmby, Martin Angus et al**
**Motorola Centre de Recherche,**
**Parc Technologique de St. Aubin,**
**Route de L'orme au Merisier,**
**Immeuble Columbia**
**91190 Gif-sur-Yvette (FR)**

Remarks:
Amended claims in accordance with Rule 86 (2) EPC.

(54) **A method and system for simultaneous bi-directional wireless communication between a user station and first and second base stations**

(57) A method of communication between a user station and first and second base stations in which the user station is simultaneously in bi-directional wireless communication with said first and second base stations, including a data transmission step in which an uplink signal including user data for communication to another user via the base stations and base station data (23) for communication to said first and second base stations is transmitted from said user station to said first and second base stations, said base station data (23) in said uplink signal including first items (26) that are processed selectively in said first base station (1) and second items (27) that are processed selectively in said second base station. The method is especially applicable when the user station is mobile, the method including a power control step in which the power of downlink signals transmitted by said base stations to the user station is controlled as a function of said data (23) in said uplink signal, the power of a first downlink signal transmitted by said first base station to said user station being controlled selectively as a function of said first item (26) and the power of a second downlink signal transmitted by said second base station to said user station being controlled selectively as a function of said second item (27).

**Figure 5**

**Description**

Field of the invention

This invention relates to communication between a user station on one hand and first and second base stations on the other hand, in which the user station is simultaneously in bi-directional wireless communication with said first and second base stations. More particularly, the invention is applicable to a communication method including a data transmission step in which an uplink signal including both user data for communication via the base stations to another user and base station data for communication to the first and second base stations is transmitted from the user station to the first and second base stations.

Background of the invention

A communication method of this kind is applied for example to power control in a code division multiple access (CDMA) communication system. So-called '3$^{rd}$ generation' communication systems using CDMA are the subject of international standards, such as the '3GPP' standards that are being developed and published by the European Telecommunications Standards Institute ('ETSI').

CDMA modulation is one of several techniques for facilitating communications in which there are multiple system users. Various aspects of CDMA technology are described in the book 'Applications of CDMA and Wireless/Personal Communications' by Vijay K. Garg et al, published by Prentice Hill in 1997. Other multiple access communication system techniques, such as time division multiple access (TDMA) and frequency division multiple access (FDMA) are also known. However, the spread spectrum modulation techniques of CDMA have significant advantages over other modulation techniques for multiple access communication systems.

An example of such a CDMA system is to be found in US Patent n° 5 982 760, Tao Chen, entitled 'Method and apparatus for power adaptation control in closed-loop communications'. This specification describes a strategy applied to both the mobile station and the base station transmissions, with variable size & rate power control. While such a system provides a measure of control and management of the operation of the system, it has become apparent that the results obtained are not optimal. In particular, it is desirable to have more flexible and detailed data transmitted to the base station in the uplink signal.

International Patent Application n° WO 99/52226, Telefonaktiebolaget LM Ericsson, entitled 'Downlink power control in a cellular mobile radio communications system' describes a power control system in which the quality of the signal received from the user station is used to control the base station downlink transmitted power. Hence, based on the quality of the uplink received signal and the transmit power control commands it conveys, the transmitted power at the involved base stations is adapted accordingly. However, this technique is not reliable if the propagation conditions are not similar on both uplink and downlink. Unfortunately, in urban environments where multi-path propagation is predominant, this assumption is not always justified.

European Patent Application publication n° EP 0940932, Lucent Technologies, Inc., for a 'Method for optimizing forward link power levels during soft handoffs in a wireless telecommunications network' proposes that in the event of one base station overload an overload indicator will be sent and no increase power commands will be processed by any of the other base stations that are members of the active set. This power restriction is then applied until the overloaded base station that triggered the method retracts the power overload indication. This method privileges the equal power strategy to the quality of service provided to the users. Consequently, the absence of response to power increase requests will lead to poor quality calls and even dropped calls in case the power overload condition lasts too long.

Summary of the invention

The present invention provides a method of communication between a user station on one hand and first and second base stations on the other hand in which the user station is simultaneously in bi-directional wireless communication with said first and second base stations, including a data transmission step in which an uplink signal including user data for communication to another user via the base stations and base station data for communication to said first and second base stations is transmitted from said user station to said first and second base stations, characterised in that said base station data in said uplink signal includes first items that are processed selectively in said first base station and second items that are processed selectively in said second base station.

More particularly, in the case of power control, the base stations may be controlled selectively as a function of different data (such as feedback data corresponding to a characteristic of the respective downlink) transmitted from the user station. The base station data may also include items common to the first and second base station, which are a function of interference levels at the user station, for example.

The characteristics of the respective downlinks in the feedback data may include the total power transmitted by the respective base station and the attenuation of the downlink path, and the power control may attribute a greater weighting to the attenuation of the downlink path than to other parameters in the feedback data.

The base station data may be transmitted in a succession of time intervals in the uplink signal, the first items being situated in a first group of the time intervals and the second items being situated in a second group of the time intervals, the first and second groups of time intervals preferably being interspersed amongst each other. The relative numbers of time intervals of said first and second groups may be variable in relation to the relative quantities of base station data in said first and second items to be processed by said first and second base stations respectively.

The first and second items of the base station data may be associated with respective first and second identification codes, the first and second base stations responding selectively to the first or second items as a function of the respective identification codes.

The invention also relates to a base station, a user station and a communication system for communication by such a method.

Brief description of the drawings

Figure 1 is a schematic diagram of a multiple access communication system,

Figure 2 is a diagram illustrating downlink transmit powers of base stations in a prior proposal for a method of controlling downlink transmit powers of base stations in a multiple access communication system,

Figure 3 is a diagram illustrating downlink transmit powers of base stations in an embodiment of a method of multiple access communication in accordance with an embodiment of the present invention,

Figure 4 is a schematic diagram showing values and timing of transmit power control commands sent by a user station in a multiple access communication system,

Figure 5 is a schematic diagram showing values and timing of transmit power control commands sent by a user station and processed by first and second base stations in a first embodiment of a method of communication in accordance with the present invention,

Figure 6 is a schematic diagram showing timing of transmit power control commands processed by first and second base stations in another embodiment of a method of communication in accordance with the present invention, and

Figure 7 is a schematic diagram showing values and timing of transmit power control commands sent by a user station and processed by first and second base stations in yet another embodiment of a method of communication in accordance with the present invention.

Detailed description of the preferred embodiments

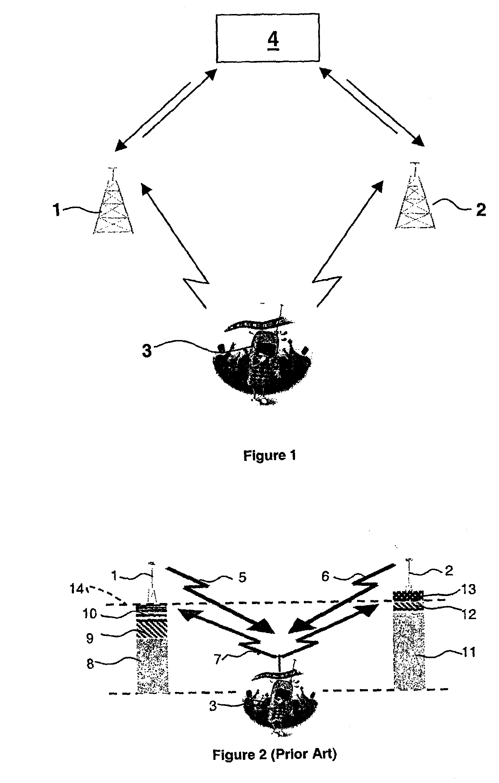

The multiple access communication systems shown in Figure 1, Figure 2 and Figure 3 comprise a first base station 1 and a second base station 2 that communicate by radio communication with portable, mobile user stations, one of which is shown at 3.

The system is of the CDMA kind and the user station 3 is shown in a position in which it is simultaneously communicating with each of the two base stations illustrated 1 and 2. This situation exists notably when a user station 3 is in the course of handover from the cell of one base station to a cell of another base station. Such simultaneous communication between the user station and more than one base station is particularly useful for a mobile user station, as it enables so-called 'soft handover', in which a user station leaving the coverage of one base station and entering the coverage of a second base station establishes communication with the second base station simultaneously with the first base station before cutting off communication with the first base station, thus helping to preserve radio link quality and service continuity. Simultaneous communication between the user station and more than one base station may also be useful with normally stationary user stations, however.

The system also includes a radio network controller 4 that is connected to base stations such as 1 and 2 by links such as cables, optical fibres, or microwave links, for example. The radio network controller 4 controls various radio network functions such as call switching and handover of communications to and from a mobile station between adjacent base stations, as well as connecting calls with the public switched network and the internet through mobile switching centres (not shown).

The communication method includes transmitting downlink signals 5 and 6 from the base stations 1 and 2 to the mobile station 3 and transmitting an uplink signal 7 from the mobile station 3 to the base stations 1 and 2. The method incorporates power control, in which feedback is obtained on the performance of the transmission paths between the base stations 1, 2 and the mobile station 3 and used to control the transmitted power. The principle of feedback control is applicable to the received signal either at the mobile station or the base station to correct the transmitted power. Both downlink and uplink power transmission levels may be controlled but the following description will be limited to power control of the downlink signals 5 and 6. Several methods may be used; the principle will be described by way of example as applied to the closed loop power control agreed in the ETSI 3GPP standards and on the downlink case. The downlink power control is performed thanks to transmit power control ('TPC') commands sent by the mobile station as base station data in the uplink signal 7.

CDMA, by its inherent nature of being a wideband signal, offers a form of frequency diversity by spreading the signal energy over a wide bandwidth. Therefore, at any one time, frequency selective fading affects only a small part of the CDMA signal bandwidth. Space or path diversity is obtained by providing multiple signal paths through simultaneous links from a mobile user or mobile station through two or more cell-sites. Furthermore, path diversity may be obtained by exploiting the multi-path environment through spread spectrum processing by allowing a signal arriving with different propagation delays to be received and processed separately. Various techniques for the control and management of the operation of the communication system require the transmission of the base station data from the user station to the base station. In particular, power control is an important factor in the successful implementation of multiple access communication systems and especially CDMA: not only must the power received by a given station be sufficient but the transmission power capacity even of the base stations (the 'downlink' power capacity) is limited and the power transmitted to and from closer stations should be reduced compared to more distant stations to optimise power capacity usage.

Interference management is also an important consideration, especially for CDMA systems. On both uplink and downlink, powers transmitted respectively by other user stations and by base station signals not intended for a given user station interfere with the wanted signals. Accordingly, in order to ensure an optimised utilization of radio resources, all power levels transmitted by the user stations on the uplink signal 7 should be received at the base station with the minimum power levels giving a satisfactory quality of reception so that a maximum number of users can be heard; similarly, the transmitted power from any base station to a given user station should be set to the minimum required for a reliable link.

In this case, the power of the downlink signal 5, 6 transmitted from a serving base station 1, 2 is received by the mobile station 3, which assesses the carrier over interference ratio ('C/I'), that is to say the ratio of the power of the received carrier signal to the power of unwanted signals which interfere with the wanted signal because of their shared frequency spectrum. The objective is for the actual C/I value measured to match a C/I target, which is service dependent. Consequently, depending on the received signal quality as measured by the C/I value, the mobile station sends a transmit power control command, which indicates if the power of the downlink signals 5, 6 transmitted at the base station side has to be increased (below C/I target) or decreased (above C/I target). The periodicity of this method is based on the frame duration (typically 10 to 15 ms). When the power control algorithm reaches a stable state (that is to say it has converged), the mobile station is provided with a reliable link at minimal cost in terms of radio resources or power.

When the mobile station 3 moves into the transition zone from one cell to another, the quality of signals achievable with both base stations 1, 2 becomes similar. Indeed, in this particular zone, what is called the active set contains the list of the cells whose path loss with the mobile station 3 does not exceed a threshold called the soft handover margin. Typically, this soft handover margin is chosen equal to 3 dB. Usually, the number of base stations 1, 2 participating in the soft handover is limited and only the best base stations in terms of path loss are chosen.

During soft handover, the mobile station 3 transmits an uplink signal 7 to its current base station 1, 2, which is ideally perceived and processed by all the base stations. In addition, the information intended for the mobile station 3 is transmitted from all the base stations 1, 2 involved in the method.

When a mobile station 3 is simultaneously communicating with more than one base station 1, 2, in particular when it is in a soft handover with more than one base station 1, 2, as shown in Figure 1 and Figure 2, each downlink 5, 6 has to be power controlled.

It is possible for all links received at the mobile station 3 to be combined, the global C/I ratio evaluated compared to the C/I target and a common transmit power control command sent to the base stations 1, 2 involved in the soft handover method in order to adjust the transmitted powers at all base stations 1, 2 accordingly. These commands are determined from the signal to interference ratio measured at the mobile station 3. As mentioned before, the same useful data is transmitted from each of the base stations 1 and 2 of the active set. As a result, the same number of downlink signals 5, 6 should be received at the mobile station and decoded. It is then possible to combine them and compute a combined carrier over interference ratio, which finally is compared to the target C/I. If the actual C/I is lower than the target value, the transmit power control command conveys a request for additional power. On the contrary, if the target C/I is higher than the actual combined value, the transmit power control command transmits the need for a lower transmit power.

In the prior art systems illustrated in Figure 2, for two base stations 1, 2 involved, the power adjustments are computed from the following equation:

$$\frac{C_1 \cdot \gamma}{I_1} + \frac{C_2 \cdot \gamma}{I_2} = \left(\frac{C}{I}\right)_{\text{target}}$$

Equation 1

where:

- $C_1$ & $C_2$ are the received power respectively on the first and second downlink signals 5 and 6.
- $I_1$ & $I_2$ are the interference levels experienced on the first and second downlink.
- $(C/I)_{\text{target}}$ is the target ratio to reach in order to have a reliable link and is service dependant.
- $\gamma$ is the power correction to apply to the downlinks. So, in this prior art method, the same power correction is applied on both links without taking into account any other factors than the gap between the global C/I experienced and the $(C/I)_{\text{target}}$.

When the uplink transmit power control command is reliably received, all base stations adjust their transmitted power in a strictly similar manner. However, when the uplink signal 7 is not properly decoded at one of the base stations 1 or 2, the powers of the downlink signals 5 and 6 transmitted by the base stations 1 and 2 diverge from the optimal values and the target C/I ratio is not reached.

Even when the feedback mechanism operates properly, a communication capacity decrease is still inevitably observed due to the additional power required for mobiles in soft handover, since the global power needed by a soft handover user is greater than the power needed when not in soft handover.

Furthermore, as illustrated in Figure 2, in this prior art method, the base stations 1 and 2 involved in the soft handover with a given user station 3 may be disparately loaded. In particular, by way of illustration, the downlink power 8 allocated to current users in base station 1 is shown in Figure 2 as substantially less than the downlink power 11 allocated to current users in base station 2, both being less than their transmit power capacity 14. The uplink signal 7 transmitted to both base stations contains the same transmit power control command, the corresponding additional transmit power 9 being accommodated by base station 1, with available unused transmit power capacity 10. However, base station 2 becomes overloaded and cannot supply all the extra transmit power of the command, supplying only a lesser amount 12 of additional transmit power and leaving the remainder 13 of the command unsatisfied. In that situation, a serious problem occurs when one of the base stations 1, 2 involved in the method cannot transmit any additional power because the requested extra power level exceeds the difference between its current demand 8, 11 and its global available capacity 14. In such a case, because the prior power control method erroneously assumes that all the base stations 1, 2 involved can respond to the transmit power control command, the C/I target is not reached at the mobile station 3. Thus, the mobile station 3 continues asking for yet more additional power, still assuming that the request can be fulfilled by all the base stations 1, 2, and the power control diverges still further from optimum, with insufficient power transmitted from the saturated base station 2 to that mobile station 3 and excessive power transmitted to it from the other, unsaturated base station 1. In fact, the divergence from optimal power control can lead to saturation of the previously unsaturated base station or stations 1 of the active set.

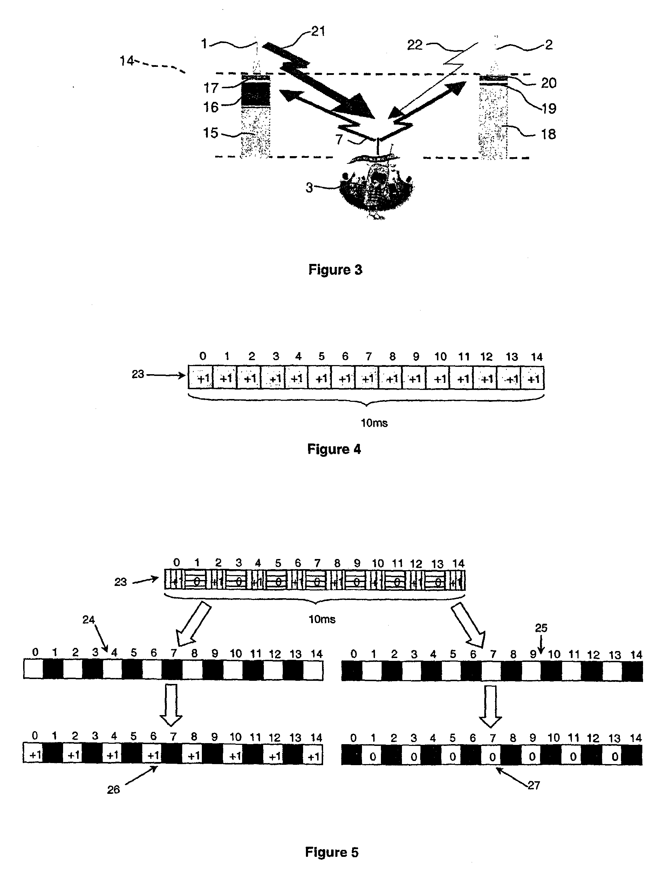

In the method of this embodiment of the present invention, however, the base station data in the uplink signal 7 includes different items for the different base stations 1, 2 that are detected and processed differently by the respective base stations 1 and 2. In particular, referring to Figure 3, the power of the downlink signal 21 for this mobile station 3 from the first base station 1 is controlled as a function of one item and the power of the downlink signal 22 for this mobile station 3 from the second base station 2 is controlled as a function of another item.

This method enables a differentiated power control scheme to be applied, which provides each user station 3 with different power corrections $\alpha$ and $\beta$ on the respective links. These two adjustment parameters $\alpha$ and $\beta$ are computed from the total transmitted powers of the two cells and the interference levels experienced by each soft handover user in each cell. Then, each base station receives its own power control command and adjusts its transmitted power for that user correspondingly.

For two base stations involved 1, 2, the power adjustments may be computed from the following equation:

$$\frac{C_1.\alpha}{I_1} + \frac{C_2.\beta}{I_2} = \left(\frac{C}{I}\right)_{t\,arget} \qquad \text{Equation 2}$$

where:

- $\alpha$ is the power correction to apply on the first link
- $\beta$ is the power correction to apply on the second link

Accordingly, it is possible to control the powers of the downlink signals 21 and 22 transmitted by the base stations 1 and 2 to the different mobile stations 3 so that:

- the global power needed by a mobile station 3 in soft handover is greater than for the same mobile station 3 not in soft handover.
- the power control in soft handover mode is so made that the power adjustment is differentiated between the base stations 1 and 2 so that the respective radio conditions (in terms of available power at each base station and interference experienced) are taken into account.
- the load is adjusted between the base stations 1 and 2 involved in the soft handover if the situation shows that one of the two base stations 1, 2 is more solicited (loaded) than the other.

The resulting situation is shown in Figure 3. As in the situation shown in Figure 2, the downlink power 15 allocated to current users in base station 1 is shown by way of illustration as substantially less than the downlink power 18 allocated to current users in base station 2, both being less than their transmit power capacity 14. The transmit power control request 16 for the first base station 1 is differentiated from the transmit power control request 19 for the second base station 2. Accordingly, the load on the two base stations 1 and 2 can be adjusted and balanced, the transmit power of the downlink signal 21 from base station 1 to the mobile station 3 becoming greater than the transmit power of the downlink signal 22 from base station 2 and possibly leaving available unused transmit power capacity 17 and 20 at both base stations 1 and 2.

The desired forward (downlink) received power ratio between the two links $R_{12}$ is the following:

$$R12 = \frac{C_1 \cdot \alpha}{C_2 \cdot \beta} \qquad \text{Equation 3}$$

Combining equations 2 and 3, it is possible to obtain the expressions for $\alpha$ and $\beta$:

$$\alpha = \frac{\left(C/I\right)_{t\,arget}}{\left(\dfrac{C_1}{I_1} + \dfrac{C_1}{I_2.R_{12}}\right)} \qquad\qquad \beta = \frac{\left(C/I\right)_{t\,arget}}{\left(\dfrac{C_2.R_{12}}{I_1} + \dfrac{C_2}{I_2}\right)} \qquad \text{Equation 4}$$

$R_{12}$ given by equation 4 defines the desired difference between the transmit powers for the first and second downlink signals 21 and 22 at the receiver side (i.e. the mobile station 3 in this case).

To determine $\alpha$ and $\beta$, the power unbalance $R_{12}$ is given by an optimisation criteria **Opt_cr** determined by some key system parameters which are:

- ■ the measured interference levels at the mobile station 3
- ■ the total emitted power at each base station 1, 2
- ■ the path-loss difference between the 2 legs supporting the call
  Several parameters are possible, including considering separately the total emitted power at base stations, and then interference levels, for example. The following, which is a combination of both, represents a good compromise in terms of performance:

$$Opt\_cr = \left(\frac{I_2}{I_1}\right)^a \times \left(\frac{BS_{total_2}}{BS_{total_1}}\right)^b \times \left(\frac{Path_2}{Path_1}\right)^c \qquad \text{Equation 5}$$

where:

- $BS_{total1}$ & $BS_{total2}$ are respectively the total transmitted powers on the first and second downlinks
- $Path_1$ & $Path_2$ are respectively the radio attenuation on the first and second downlinks
- (a, b, c) are weighting factors

The network operator can determine experimentally the optimum weighting factors for a particular situation. However, simulations show empirically that good system performance is reached with [a b c]= [1 1 2]. The results presented below were obtained with this configuration.

This optimisation criteria is then linked to the power unbalance ratio $R_{12}$ (equation 3).

Hence, we obtain:

$$R_{12} = \frac{C_1.\alpha}{C_2.\beta} = \left(\frac{I_2}{I_1}\right)^a \times \left(\frac{BS_{total_2}}{BS_{total_1}}\right)^b \times \left(\frac{Path_2}{Path_1}\right)^c = Opt\_cr \qquad \text{Equation 6}$$

In the case [a b c]=[1 1 2],

$$\frac{C_1.\alpha}{C_2.\beta} = \left(\frac{I_2}{I_1}\right)^1 \times \left(\frac{BS_{total_2}}{BS_{total_1}}\right)^1 \times \left(\frac{Path_2}{Path_1}\right)^2 \qquad \text{Equation 7}$$

Parameters $\alpha$ and $\beta$ are then computed using equations 4 and 7 and the corresponding power corrections are used for the two base stations 1 and 2. These power corrections will take into account the load for each base station 1, 2 in soft handover with a particular mobile station 3, the interference levels experienced in each cell involved and the radio attenuation.

It will readily be understood that this scheme provides a context fitted power control principle, as it does not only take account of the user needs but rather is a contextual adaptive method, balancing the power demand for the mobile station 3 in respect of more global network conditions, enabling better control of the system load.

Power adjustments are made with the aim of optimising the macro radio resource management so that results are judged at a macro level. More precisely, the results relate to the total transmitted power at the base station 1, 2 and the global system performance. The impact of power control in accordance with the above embodiment of the present invention on the statistical distribution of total base station downlink powers as well as capacity gains in the presence of load imbalance between the cells gives a substantial improvement in terms of improved distribution of the base station resources, improving the base station saturation in terms of transmitted power, increasing the maximum number of user stations that can be handled and mitigating the reduction in system capacity when user stations enter into soft handover in a CDMA system.

In a practical implementation of the scheme as applied to a system according to the Universal Mobile telecommunication System (UMTS) standards, as shown by equation 5, three parameters are measured or assessed on both links to determine the optimisation criteria, that is:

- ☐ the interference levels of the received signals.
- ☐ the ratio of the path-loss associated with the links involved.
- ☐ the total transmitted power at the base stations 1, 2.

Although the interference levels can easily be measured at the mobile station, the path-loss ratio and the total transmission power at the base stations 1 and 2 cannot be measured but must be deduced or assessed.

Thanks to the system information broadcasted within the cell on the broadcast channel (BCH), the path-loss between the mobile station and the base station can be obtained. Indeed, the primary common pilot channel (CPICH) transmit power (CPICH TX POWER) is mentioned in the system information, and more precisely in the transmitted data blocks 6 & 7. Thus, the user equipment knows the downlink transmit power of the primary CPICH channel broadcasted within the surrounding cells.

What is more, 3GPP standards (3G TS 25.133 V3.2.0, Requirements for Support of Radio Resource Management (FDD) and 3G TS 25.302 V3.5.0, Services provided by the Physical Layer) show that the user is able to perform some measurements on the CPICH, that is the received signal code power (RSCP) and the Interference on signal code power (ISCP).

As a result, the path-loss between the mobile station 3 and the base stations 1 and 2 can easily be computed:

$$Path_1 = Pr\mathit{imary\_CPICH\_TX\_POWER}_1 - RSCP_1 \qquad \text{Equation 8}$$

$$Path_2 = Pr\ \mathit{imary\_CPICH\_TX\_POWER}_2 - RSCP_2 \qquad \text{Equation 9}$$

The last parameters to compute are the total emitted power at the base stations 1 and 2. Today, it is possible to distinguish intra cell interference from inter cell interference but at high computational cost. Then, the total emitted power at the base station is obtained by adding the path-loss values to the measured intra cell interference levels.

$$BS_{Total_i} = (Interf\_level_{int\,ra_i} + C_i) \times Path_i \text{ with i=1, 2}$$

More simply, another means to obtain $BS_{Total_i}$ would be to broadcast these values within each cell.
This is not envisaged in the current UMTS standards but could easily be envisaged in future releases.

As a result and based on the UMTS standards, all the parameters necessary for a differential power control strategy are, or can be made, available.

Various methods are available for transmitting different power control commands to the different base stations. Both code division multiplex and time division multiplex techniques enable transmit power control commands to be transmitted in the uplink signal 7.

In a first embodiment of the invention, compatible with the existing UMTS standards, the mobile station 3 uses the same scrambling code in the base station data in the uplink signal for both base stations 1 and 2 so that both base stations 1 and 2 receive the same commands at the same time. The scrambling code is an identification code from a set common to the base stations of a given radio network controller and different from the scrambling code set of neighbouring radio net controllers. The base stations of a given radio network controller use this set of scrambling codes to decode mobile station uplinks.

As shown in Figure 4, the transmit power control commands 23 are sent in successions or frames of time intervals or slots in the uplink signal, each frame lasting 10 ms (milliseconds) and comprising 15 slots, corresponding to a power control refresh rate of 1.5 kHz (kilohertz). The command in each slot can take three different values -1, 0 or +1, corresponding to the cases where the mobile station 3 requires one unit more power, the same power or one unit less power in the downlink. The base station 1, 2 reacts by adjusting the transmit power of the downlink for that mobile station 3 by a fixed step for the command of each slot, in this case +1dBm, 0 or -1dBm. After several iterations and provided that the power levels remain within the constraints of 30dBm from any base station 1, 2 to a given user station 3 and 43dBm total transmit power for each base station 1 or 2, the mobile station 3 can be provided with a satisfactory downlink, with neither insufficient nor excessive downlink power. The case shown in Figure 4 corresponds to an extreme case where the mobile station 3 requires considerably more downlink power and all 15 slots in the transmit power control commands 23 are power increase commands; typically, in practice, fewer power change commands will be sufficient.

In order to differentiate transmit commands for the different base stations 1 and 2 with which the mobile station 3 is in simultaneous communication, in this embodiment of the invention, each succession of time intervals 23 is divided into different groups which are interspersed amongst each other; the commands 23 are all transmitted by the mobile station 3 in the base station data of the uplink signal 7 to all the base stations 1, 2 but each base station processes the commands selectively, only reacting to commands in the slots of the group allotted to that base station. Hence the base stations 1, 2 apply respective masks 24, 25 to the slots of each frame, reacting only to the allocated slots that its mask indicates and discarding the others. In the case of two base stations 1 and 2, as shown in Figure 5, alternate slots of each frame are used for the respective base stations, one base station 1 reacting only to transmit power control commands that fall within each group 26 of even numbered slots and the other base station 2 reacting only to commands in each group 27 of odd numbered slots, as defined by the respective masks 24 and 25. As shown in the drawing, it is possible in an extreme case for one base station, 1, to receive multiple commands to increase its transmit power in each frame, whereas another base station, 2, receives in the same frame commands to keep its transmit power constant.

In practice, preferably in response to a signal from the mobile station 3 which triggers the process of differentiating the transmit power control commands, the radio network controller 4 will define the moment when the transmit power control commands are to be differentiated and will then allocate the different groups of slots to the different base stations 1, 2, the synchronisation signals being sent directly to the base stations over the control channels and corresponding information being sent to the mobile stations 3 over the dedicated control information channel of the downlink.

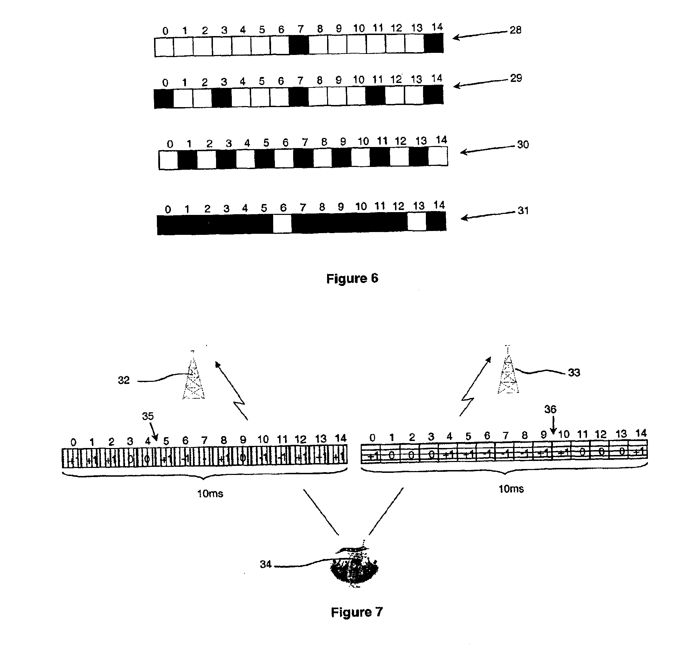

While this embodiment of the invention already represents a substantial improvement over the use of identical transmit power control commands for all the base stations 1, 2 communicating with the given mobile station 3, a variant illustrated in Figure 6 offers an improvement in the overall power control refresh rate in the circumstances where the speed of change in transmit power required from one base station is different from that from another base station. More particularly, the relative numbers of slots in the groups allocated to the respective base stations 1, 2 in each frame 23 is variable as a function of the relative quantities of base station data in the transmit power control commands for the different base stations. Accordingly, the masks can be adjusted dynamically so that the base station whose transmit power is to be adjusted faster has a mask covering more slots in each frame than a base station needing only slow or occasional adjustment. This difference in the power control refresh rates needed may occur when one base station is close to saturation in terms of its total transmit power capacity and therefore cannot increase its transmit power, any increase in power required by the mobile station having to come from a less loaded base station, for example.

Figure 6 shows the mask of the base station 1, the slots to which the base station 1 reacts being shown in white (the slots to which the base station 2 reacts are the other slots, shown in black in the figure). As shown, if the base station 1 is much less loaded than the base station 2, adjusting the respective masks as at 28 so that the base station 1 reacts to considerably more slots in each frame than the base station 2 enables the base station 1 to react more rapidly to a call for a change (increase or decrease) in transmit power, the slower reaction time of the base station 2 not being of such great consequence, as its capacity for usefully changing its transmit power is limited anyway.

The respective slot allocations can vary with time, as shown in the drawing, where initially the base station 1 reacts to thirteen slots out of fifteen, as at 28, and the base station 2 monitors only two slots out of fifteen. Subsequently, as at 29, as the loads become less unbalanced and the speed of desired change of transmit power from the two base stations becomes more similar, the base station 1 reacts to eight slots out of fifteen and the base station 2 monitors five slots out of fifteen. When the loads of the two base stations 1 and 2, and therefore the amounts of transmit power control data to which the two base stations are to react, become similar, the two base stations 1 and 2 can monitor similar numbers of slots, as at 30, and when the amount of transmit power control data needed by the base station 2 becomes much greater than is the case for the base station 1, the number of slots allocated to the base station 2 can become much greater than to the base station 1, as at 31.

These techniques for selectively processing different items of the base station data in respective base stations 1, 2 with a single uplink scrambling code are compatible with existing power control standards. It is sufficient to communicate additional information to the base stations 1, 2 involved to identify the items to which they are to respond.

The slot synchronisation information could be defined at the base station side (by the radio network controller 4, for example) and communicated over the downlink to the mobile station 3. However, if the downlink capacity is more limited, because of a predominance of downlink traffic, for example, it may be preferred to define the slot synchronisation information at the mobile station side and transmit it over the uplink to the base stations 1, 2; this may especially be the case in UMTS FDD (frequency division duplex), where the uplink and downlink bandwidths are similar.

In the case where the mask sizes are variable, the numbers of slots allocated in each frame to each base station 1, 2, and hence the power control command refresh rate, may be defined at the base station side and broadcast as an additional field embedded in a common channel throughout the cell.

In the embodiment of the invention shown in Figure 7, different scrambling codes are used for uplink to the different base stations 32, 33 with which the mobile station 34 is in simultaneous communication. This represents a departure from the currently proposed UMTS standards as far as the uplink is concerned although the different downlink channels are already distinguished in this way. The respective transmit power control commands 35, 36 are transmitted in parallel to the different base stations 32, 33, which react selectively to them with the full refresh rate. The transmit power control commands can be totally independent of each other.

The mobile station 34 transmits the base station data simultaneously with different scrambling codes for the respective base stations 32, 33; this is in any case required to be within the capabilities of a mobile station, so that it may perform soft handover between two base stations belonging to different radio network controllers.

The techniques of differentiating the items of base station data to be processed by the different base stations 1, 2 by use of masks 24, 25, as described with reference to Figure 5 and Figure 6, and by use of different scrambling codes, as described with reference to Figure 7, are not mutually exclusive. It is possible for the network side to transmit an indicator to the mobile station 3 and the base stations 1, 2 involved that triggers the use of a mask (as in Figure 5 or Figure 6) or the different scrambling codes (as in Figure 7), according to the circumstances.

**Claims**

1. A method of communication between a user station (3, 34) on one hand and first and second base stations (1, 2; 32, 33) on the other hand in which the user station (3, 34) is simultaneously in bi-directional wireless communication with said first and second base stations (1, 2; 32, 33), including a data transmission step in which an uplink signal (7) including user data for communication to another user via the base stations (1, 2; 32, 33) and base station data for communication to said first and second base stations (1, 2; 32, 33) is transmitted from said user station (3, 34) to said first and second base stations (1, 2; 32, 33),
   **characterised in that** said base station data in said uplink signal (7) includes first items (26; 35) that are processed selectively in said first base station (1; 32) and second items (27; 36) that are processed selectively in said second base station (2; 33).

2. A method of communication as claimed in claim 1 wherein said user station (3, 34) is mobile, and including a power control step in which the power of downlink signals transmitted by said base stations (1, 2; 32, 33) to said user station (3, 34) is controlled as a function of said data in said uplink signal,
   **characterised in that** the power of a first downlink signal (21) transmitted by said first base station (1; 32) to said user station (3, 34) is controlled selectively as a function of said first items (26; 35) and the power of a second downlink signal (22) transmitted by said second base station (2; 33) to said user station (3, 34) is controlled selectively as a function of said second items (27; 36).

3. A method of communication as claimed in claim 2 wherein said base station data in said uplink signal (7) is a function of a characteristic of said downlink signals received at said user station (3, 34) from said base stations (1, 2; 32, 33),
   **characterised in that** said first items (26; 35) are a function of a characteristic of said first downlink signal (21) received by said user station (3, 34) from said first base station (1; 32) and said second items (27; 36) are a function of a characteristic of said second downlink signal (22) received by said user station (3, 34) from said second base station (2; 33).

4. A method of communication as claimed in claim 3
   **characterised in that** said data is also a function of a parameter related to interference by signals received by said user station (3, 34) from other user stations.

5. A method of communication as claimed in claim 3 or 4,
   **characterised in that** said data is also a function of a parameter related to the total power transmitted by said first and second base stations (1, 2; 32, 33) such as to reduce the transmit power requested from a more loaded base station.

6. A method of communication as claimed in any of claims 3 to 5,
   **characterised in that** said first items (26; 35) are a function of a parameter related to the attenuation of the transmission path of said first downlink signal received by said user station (3, 34) from said first base station (1; 32) and said second items (27; 36) are a function of a parameter related to the attenuation of the transmission path of said second downlink signal received by said user station (3, 34) from said second base station (2; 33).

7. A method of communication as claimed in claim 6,
   **characterised in that** the power of downlink signals (21, 22) transmitted by said base stations (1, 2; 32, 33) to said user station is controlled with a weighting attributed to said parameter related to the attenuation of the transmission path of the downlink signals received by said user station (3, 34) which is greater than a weighting attributed to other parameters of said downlink signals.

8. A method of communication as claimed in any preceding claim wherein said base station data is transmitted in a succession of time intervals (23) in said uplink signal (7),
   **characterised in that** said first items (26; 35) are situated in a first group of time intervals of said succession and said second items (27; 36) are situated in a second group of time intervals of said succession (23).

9. A method of communication as claimed in claim 8,
   **characterised in that** said first and second groups of time intervals (26, 27) are interspersed amongst each other in a succession of time intervals (23).

**10.** A method of communication as claimed in claim 8,
**characterised in that** the relative numbers of time intervals of said first and second groups are variable in relation to the relative quantities of base station data in said first and second items to be processed by said first and second base stations (1, 2) respectively.

**11.** A method of communication as claimed in any preceding claim,
**characterised in that** said first and second items (35, 36) are associated with respective first and second identification codes and said first and second base stations (1, 2) respond selectively to said items as a function of said identification codes.

**12.** A base station for communication by a method as claimed in any preceding claim,
**characterised by** means selectively responsive to one of said first and second items (26, 27; 35, 36) for adjusting a transmission characteristic of said base station (1, 2).

**13.** A user station for communication by a method as claimed in any of claims 3 to 9,
**characterised by** means for generating said first items (26; 35) as a function of the power of said first downlink signal (21) received by said user station (3, 34) from said first base station (1) and for generating said second items (27; 36) as a function of the power of said second downlink signal (22) received by said user station (3, 34) from said second base station (2).

**14.** Communication apparatus for communication by a method as claimed in any of claims 8 to 11 and comprising said user station (3, 34) and said first and second base stations (1, 2),
**characterised in that** said first base station (1) includes means selectively responsive to items (26; 35) situated in said first group of said time intervals and said second base station (2) includes means selectively responsive to items (27; 36) situated in said second group of said time intervals


**Amended claims in accordance with Rule 86(2) EPC**

**1.** A method of communication between a user station (3, 34) on one hand and first and second base stations (1, 2; 32, 33) on the other hand in which the user station (3, 34) is simultaneously in bi-directional wireless communication with said first and second base stations (1, 2; 32, 33), including a data transmission step in which an uplink signal (7) including user data for communication to another user via the base stations (1, 2; 32, 33) and base station data for communication to said first and second base stations (1, 2; 32, 33) is transmitted from said user station (3, 34) to said first and second base stations (1, 2; 32, 33), said base station data in said uplink signal (7) Including first items (26; 35) that are processed selectively by said first base station (1; 32) and second items (27; 36) that are processed selectively by said second base station (2; 33), and a power control step in which the power of a first downlink signal (21) transmitted by said first base station (1; 32) to said user station (3, 34) is controlled selectively as a function of said first items (26; 35) and the power of a second downlink signal (22) transmitted by said second base station (2; 33) to said user station (3, 34) is controlled selectively as a function of said second items (27; 36)
**characterised in that** first and second desired corrections ($\alpha$, $\beta$) to the transmission powers of said first and second downlink signals (21, 22) are calculated that are a function of the respective values ($C_1$, $C_2$) of the received first and second downlink signals (21, 22) and interference thereto ($I_1$, $I_2$) at said user station (3, 34), of a desired relative value ($R_{12}$) of the received first and second downlink signals (21, 22) at said user station (3, 34), and of a target value (($C/I)_{target}$) for the total power of the received first and second downlink signals (21, 22) and interference thereto.

**2.** A method of communication as claimed in claim 1, wherein said desired relative value ($R_{12}$) of the received first and second downlink signals (21, 22) at said user station (3, 34) is calculated as a function of a parameter related to interference by signals received by said user station (3, 34) from other user stations.

**3.** A method of communication as claimed in claim 1 or 2, wherein said desired relative value ($R_{12}$) of the received first and second downlink signals (21, 22) at said user station (3, 34) is calculated as a function of a parameter related to the total powers ($BS_{total1}$, $BS_{total2}$) transmitted by said first and second base stations (1, 2; 32, 33), said desired corrections ($\alpha$, $\beta$) being calculated so as to reduce the transmit power requested from a more loaded base station.

**4.** A method of communication as claimed in any preceding claim, wherein said desired relative value ($R_{12}$) of the received first and second downlink signals (21, 22) at said user station (3, 34) is calculated as a function of a parameter related to the attenuations of the transmission paths of said first and second downlink signals received by said user station (3, 34) from said first and second base stations (1, 2; 32, 33).

**5.** A method of communication as claimed in claim 4, wherein said desired relative value ($R_{12}$) of the received first and second downlink signals (21, 22) at said user station (3, 34) is calculated with a weighting attributed to said parameter related to the attenuations of the transmission paths of the downlink signals received by said user station (3, 34) which is greater than a weighting attributed to other parameters of said downlink signals.

**6.** A method of communication as claimed in any preceding claim wherein said base station data is transmitted in a succession of time intervals (23) in said uplink signal (7), said first items (26; 35) are situated in a first group of time intervals of said succession and said second items (27; 36) are situated in a second group of time intervals of said succession (23).

**7.** A method of communication as claimed in claim 6, wherein said first and second groups of time intervals (26, 27) are interspersed amongst each other in a succession of time intervals (23).

**8.** A method of communication as claimed in claim 6 or 7, wherein the relative numbers of time intervals of said first and second groups are variable in relation to the relative quantities of base station data in said first and second items to be processed by said first and second base stations (1, 2) respectively.

**9.** A method of communication as claimed in any preceding claim, wherein said first and second items (35, 36) are associated with respective first and second identification codes and said first and second base stations (1, 2) respond selectively to said items as a function of said identification codes.

**10.** A base station for communication by a method as claimed in any preceding claim and comprising means selectively responsive to a corresponding one of said first and second items (26, 27; 35, 36) for adjusting transmission powers of said base station (1, 2).

**11.** A base station as claimed in claim 10 for communication by a method as claimed in any of claims 6 to 8, wherein said means selectively responsive to a corresponding one of said first and second items (26, 27; 35, 36) comprises means selectively responsive to items situated in a corresponding one of said groups of said time intervals..

**12.** A user station for communication by a method as claimed in any of claims 1 to 9, comprising means for generating said first and second items (26, 27; 35, 36) as a function of said first and second desired corrections ($\alpha$, $\beta$).

**13.** A user station as claimed in claim 12, comprising means for calculating said first and second desired corrections ($\alpha$, $\beta$).

Figure 1

Figure 2 (Prior Art)

Figure 3

10ms

Figure 4

10ms

Figure 5

**Figure 6**

**Figure 7**

European Patent Office

## EUROPEAN SEARCH REPORT

Application Number

EP 01 40 1332

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 00914 A (SAMSUNG ELECTRONICS CO LTD) 7 January 1999 (1999-01-07) * abstract * * page 5, line 2 - page 10, line 12 * * page 14, line 10 - page 15, line 27 * * figures 3-5 * | 1,2,8, 11-14 | H04B7/005 |
| A | US 6 085 108 A (KNUTSSON JENS ET AL) 4 July 2000 (2000-07-04) * abstract * * claims 1,4,8,11 * | 1-7 | |
| A | EP 1 061 669 A (CIT ALCATEL) 20 December 2000 (2000-12-20) * abstract * * claims 1,4 * | 1-7 | |

TECHNICAL FIELDS SEARCHED (Int.Cl.7)

H04B

The present search report has been drawn up for all claims

| Place of search | Date of completion of the search | Examiner |
|---|---|---|
| THE HAGUE | 9 November 2001 | Yang, Y |

EPO FORM 1503 03.82 (P04C01)

## ANNEX TO THE EUROPEAN SEARCH REPORT
## ON EUROPEAN PATENT APPLICATION NO.

EP 01 40 1332

This annex lists the patent family members relating to the patent documents cited in the above–mentioned European search report.
The members are as contained in the European Patent Office EDP file on
The European Patent Office is in no way liable for these particulars which are merely given for the purpose of information.

09-11-2001

| Patent document cited in search report | | Publication date | Patent family member(s) | | Publication date |
|---|---|---|---|---|---|
| WO 9900914 | A | 07-01-1999 | US | 6304562 B1 | 16-10-2001 |
| | | | AU | 723468 B2 | 24-08-2000 |
| | | | AU | 7940698 A | 19-01-1999 |
| | | | BR | 9810333 A | 05-09-2000 |
| | | | CN | 1261481 T | 26-07-2000 |
| | | | EP | 0990315 A1 | 05-04-2000 |
| | | | JP | 2000513918 T | 17-10-2000 |
| | | | WO | 9900914 A1 | 07-01-1999 |
| US 6085108 | A | 04-07-2000 | AU | 7702498 A | 21-12-1998 |
| | | | BR | 9809956 A | 01-08-2000 |
| | | | CN | 1266561 T | 13-09-2000 |
| | | | EP | 1048130 A2 | 02-11-2000 |
| | | | TW | 396686 B | 01-07-2000 |
| | | | WO | 9856200 A2 | 10-12-1998 |
| EP 1061669 | A | 20-12-2000 | EP | 1061669 A1 | 20-12-2000 |
| | | | AU | 5682300 A | 09-01-2001 |
| | | | WO | 0079698 A2 | 28-12-2000 |

EPO FORM P0459

For more details about this annex : see Official Journal of the European Patent Office, No. 12/82